Europäisches Patentamt

European Patent Office

Office européen des brevets

(19)

(11) Publication number: **0 138 341**
**B1**

(12) **EUROPEAN PATENT SPECIFICATION**

(45) Date of publication of patent specification: 26.10.88

(51) Int. Cl.⁴: **C 12 H 1/14**

(21) Application number: **84305854.6**

(22) Date of filing: **28.08.84**

(54) **Beer and other beverages and their manufacture.**

(30) Priority: **03.09.83 GB 8323686**
**18.04.84 GB 8410142**

(43) Date of publication of application:
**24.04.85 Bulletin 85/17**

(45) Publication of the grant of the patent:
**26.10.88 Bulletin 88/43**

(84) Designated Contracting States:
**AT BE CH DE FR IT LI LU NL SE**

(56) References cited:
**BE-A- 463 932**
**FR-A- 400 471**
**GB-A-2 001 341**
**US-A-3 970 520**

(73) Proprietor: **Bass Public Limited Company**
**137 High Street**
**Burton-on-Trent DE14 1JZ (GB)**

(72) Inventor: **Bamforth, Charles William**
**1 Holland Park Barton-under-Needwood**
**Burton-on-Trent Staffordshire (GB)**
Inventor: **Cope, Roy**
**58A Rugeley Road Chase Terrace**
**Walsall West Midlands (GB)**

(74) Representative: **Wallbank, Roger Wickham et al**
**BARKER, BRETTELL & DUNCAN 138 Hagley**
**Road**
**Edgbaston Birmingham, B16 9PW (GB)**

Courier Press, Leamington Spa, England.

## Description

This invention relates to beer and other beverages and to their manufacture. In particular the invention is concerned with the incorporation into a beverage of an additive enabling the beverage to have a head formed on it or to improve the quality of the head that can be formed on it.

The invention is primarily applicable to beer, and the term beer is used herein to designate generally any of a variety of alcoholic beverages made by the fermentation of hopped malt wort; it thus includes within its scope ales, lagers and stouts. Beer itself is normally dispensed with a head, but there are also other beer-like beverages that are, like beer, bright and without haze and that are normally dispensed with a head to which the invention is also particularly applicable, these including beverages which include little or no alcohol but otherwise resemble beer quite closely.

In addition to such beer-like beverages the invention may be applied both to other beverages which are bright and without haze and are customarily dispensed with a head and to beverages which are bright and without haze and which have not hitherto been customarily dispensed with a head. These latter beverages may include wines, 'made wines', fortified wines and spirits. The invention is particularly applicable to carbonated beverages, both alcoholic and non-alcoholic, as the release of gas which tends to occur as the beverage is dispensed encourages a tendency to head-formation.

The foam or head that is normally present on a glass of beer is an important feature of the beer, and it has been found that many consumers, when judging the quality of a beer, consider that for a beer to have a head of good quality is one of the most important factors in the beer's favour. Much the same is also true of other beverages on which a head is formed. It is considered that a head is of good quality if it has a number of attributes, among which are stability, the ability to form 'lacing', that is a lace-like pattern of bubbles left on the side of the glass after the liquid beer or other beverage has been wholly or largely consumed, and a good appearance, that is a good colour (usually a while colour) and a preponderance of small bubbles of substantially uniform size.

The nature of the head on a glass of beer or other beverage depends principally on two factors, one being the constitution or composition of the beverage itself and the other being the way in which the beverage is dispensed. At least inasfar as its application to beer is concerned, the present invention is primarily concerned with the former of those factors.

US—A—3 970 520 is concerned with the production and use of a nutritious, soluble protein supplement for beverages and other edible products. An animal or vegetable protein is isolated, enzymatically hydrolysed and incorporated in the particular product concerned. Proteins may be derived from various sources; among preferred proteins are proteins derived from whey, egg albumen, soy and fish. In one example, hydrolysed egg albumen is added to coffee, while in another example soy protein hydrolysate is added to beer. In the latter case increased foaming was noted but was stated to present no processing difficulties.

It has been observed that the addition of proteinaceous material to a clear, bright beer tends to give rise to haze. Haze formation tends to increase on the passage of time. Haze also tends to occur on pasteurisation; this is thought to be a consequence of the occurrence of chemical reactions, probably including polymerisation, when the beer is heated during pasteurisation. As it is desirable to maintain the clarity of bright beverages, it is therefore generally desirable to avoid the addition of proteinaceous materials. If such materials are added, it is normally desirable that the proportions added be as small as possible. The same is true of other bright beverages.

While the presence of soy protein hydrolysate in beer generally leads to improved head formation, relatively large quantities are required to be effective. They are therefore likely to give rise to noticeable haze formation.

The flavour of soy protein hydrolysate is fairly compatible with that of beer, so that the addition of such relatively large quantities of the hydrolysate does not render the beer unpalatable. The flavour of egg albumen hydrolysate, on the other hand, is not similar to or generally compatible with that of beer. Indeed, egg albumen hydrolysate is described in US—A—3 970 520 as being "unique in that it is particularly compatible with the overall flavor, mouthfeel and appearance of coffee".

The present invention is founded on the surprising discovery that the head on beer and other clear, bright beverages can be significantly enhanced by the addition of such a relatively small proportion of egg albumen hydrolysate that its flavour does not adversely affect the flavour of the beverage and that its presence generally leads to no more than an insignificant tendency to haze formation, either on pasteurisation or on storage.

From a first aspect the present invention consists in a method of modifying or improving beer or other beverage, the beverage being bright and without haze, which method comprises the step of incorporating in the beverage concerned an additive enabling the beverage to have a head formed on it or to improve the quality of the head that can be formed on it, the additive comprising protein fragments made by the partial hydrolysis of protein material, and the method being characterised in that the protein material comprises egg albumen, and is added in an effective amount to improve or cause head formation without inducing haze formation.

The amount of additive required to improve the beer or other beverage can readily be determined by experiment. The characteristics of the head which tend to be particularly improved by the addition of the additive are the stability of the head, the whiteness of the head and the ability to form lacing. If the proportion of the additive in the beverage is further increased the beverage may become such that a head formed on it becomes excessively stiff, firm and stable.

The additive is preferably formed as an aqueous solution, and that solution may also contain a minor addition of ethyl alcohol.

The partial hydrolysis is preferably carried out with the aid of a pepsin.

Partial hydrolysis of the protein material can yield protein fragments large enough to improve the quality of the head, particularly the stability of the head, without giving rise to any noticeable or unacceptable increase in haze, even on pasteurisation. The extent of the hydrolysis necessary to achieve such a result can readily be determined by experiment. It is likely that partial hydrolysis will yield a mixture which contains protein material that has not been hydrolysed and/or protein fragments that remain so lengthy as to tend to lead to haze-formation. It is therefore preferred to separate at least some of such unhydrolysed protein material and/or excessively long protein fragments from the mixture before use. This is preferably effected by centrifuging the mixture and discarding the precipitate.

Therefore the additive used preferably comprises fragments of protein material separated from any remaining unsevered protein material.

In the manufacture of beverages that are not fermented the additive may be added at any desired stage of the manufacture. Likewise, in the manufacture of fermented beverages such as beer the additive may be added at any desired stage; nevertheless it is found that protein fragments tend to be destroyed or removed at various stages during manufacture, so it is preferred to add the additive at a relatively late stage. In particular, proteinaceous material tends to be destroyed during fermentation, so it is preferred to add the additive later than the fermentation stage. In addition there is a tendency for proteinaceous material to become concentrated in any froth that may be formed during manufacture and for it to be lost when such froth is discharged. Proteinaceous material may also be lost in any precipitates that may occur during manufacture. Therefore the additive may conveniently be added at a conditioning stage or at a brightening stage, but is preferably added before a pasteurisation stage.

As far as beer and beer-like beverages are concenred, the wort from which they are made usually contains quantities of proteinaceous material that would be quite sufficient for the formation of a head of good quality on the beverage if that material remained present in the same concentration throughout the manufacturing process. As explained above, however, it is normal for a significant proportion of the material to be lost at later stages in the process. The present invention, therefore, in adding proteinaceous material, can in part be thought of as providing in place of the lost material a replacement proteinaceous material.

From a second aspect the present invention consists in beer or other beverage that is bright and without haze, characterised in that it is modified or improved by a method in accordance with the first aspect of the present invention.

The invention will now be illustrated by the following Example.

Example

An aqueous solution of dried egg white is acidified so as to have a pH of 1.5. This is treated with pepsin for 30 minutes at 50°C. The solution is then taken to a pH of 6.5 and is heated to 65°C for 60 minutes. The mixture is then cooled and is centrifuged so that unhydrolysed protein forms a precipitate, which is removed by filtration. The resultant clear liquid is used as an additive for beer and has the effect of modifying or improving the head that can be formed on the beer.

An additive made by the method described in the foregoing Example may also be used as an additive for beverages other than beer but which, like beer, are bright and without haze. Such beverages may be of the kind on which a head is normally formed when the beverage is dispensed or of the kind on which a head has not hitherto normally been formed.

**Claims for the contracting states: BE CH DE FR IT LI LU NL SE**

1. A method of modifying or improving beer or other beverage, the beverage being bright and without haze, which method comprises the step of incorporating in the beverage concerned an additive enabling the beverage to have a head formed on it or to improve the quality of the head that can be formed on it, the additive comprising protein fragments made by the partial hydrolysis of protein material, and the method being characterised in that the protein material comprises egg albumen and is added in an effective amount to improve or cause head formation without inducing haze formation.

2. A method according to claim 1 characterised in that the additive is formed as an aqueous solution.

3. A method according to claim 2 characterised in that the additive also contains a minor addition of ethyl alcohol.

4. A method according to any one of the preceding claims characterised in that the additive comprises fragments of protein material separated from any remaining unsevered protein material.

5. A method according to any one of the preceding claims characterised in that the beverage is made by a process including a fermentation stage and in which the additive is added at a stage later than the fermentation stage.

6. A method according to claim 5 characterised in that the beverage is beer.

7. Beer or other beverage that is bright and without haze, characterised in that it is modified or improved by a method in accordance with any one of claims 1 to 6.

**Claims for the contracting state: AT**

1. A method of modifying or improving beer or other beverage, the beverage being bright and without haze, which method comprises the step of incorporating in the beverage concerned an additive enabling the beverage to have a head formed on it or to improve the quality of the head that can be formed on it, the additive comprising protein fragments made by the partial hydrolysis of protein material, and the method being characerised in that the protein material comprises egg albumen and is added in an effective amount to improve or cause head formation without inducing haze formation.

2. A method according to claim 1 characterised in that the additive is formed as an aqueous solution.

3. A method according to claim 2 characterised in that the additive also contains a minor addition of ethyl alcohol.

4. A method according to any one of the preceding claims characterised in that the additive comprises fragments of protein material separated from any remaining unsevered protein material.

5. A method according to any one of the preceding claims characterised in that the beverage is made by a process including a fermentation stage and in which the additive is added at a stage later than the fermentation stage.

6. A method according to claim 5 characterised in that the beverage is beer.

**Patentansprüche für die Vertragsstaaten: BE CH DE FR IT LI LU NL SE**

1. Verfahren zur Modifizierung oder Verbesserung von Bier oder einem anderen Getränk, welches klar und trübungsfrei ist, welches Verfahren den Schritt der Zugabe eines Zusatzes zu dem Getränk umfaßt, welcher die Bildung einer Schaumkrone auf dem Getränk oder die Verbesserung einer auf ihm ausbildbaren Schaumkrone ermöglicht, und wobei der Zusatz durch teilweise Hydrolyse von Proteinmaterial gewonnene Proteinfragmente umfaßt, dadurch gekennzeichnet, daß das Proteinmaterial Eiweiß umfaßt und in einer wirksamen Menge zugesetzt wird, so daß die Bildung einer Schaumkrone verbessert oder verursacht wird, ohne daß eine Trübung entsteht.

2. Verfahren nach Anspruch 1, dadurch gekennzeichnet, daß der Zusatz als wässrige Lösung hergestellt wird.

3. Verfahren nach Anspruch 2, dadurch gekennzeichnet, daß der Zusatz auch eine kleine Beigabe von Äthylalkohol enthält.

4. Verfahren nach einem der vorangehenden Ansprüche, dadurch gekennzeichnet, daß der Zusatz Fragmente von Proteinmaterial umfaßt, die von jeglichem verbliebenem unzerlegtem Proteinmaterial abgetrennt sind.

5. Verfahren nach einem der vorangehenden Ansprüche, dadurch gekennzeichnet, daß das Getränk in einem Verfahren mit einer Fermentationsstufe hergestellt wird und der Zusatz in einer der Fermentationsstufe nachfolgenden Stufe zugesetzt wird.

6. Verfahren nach Anspruch 5, dadurch gekennzeichnet, daß das Getränk Bier ist.

7. Bier oder ein anderes klares und trübungsfreies Getränk, dadurch gekennzeichnet, daß es nach dem Verfahren der Ansprüche 1 bis 6 modifiziert oder verbessert ist.

**Patentansprüche für den Vertragsstaat: AT**

1. Verfahren zur Modifizierung oder Verbesserung von Bier oder einem anderen Getränk, welches klar und trübungsfrei ist, welches Verfahren den Schritt der Zugabe eines Zusatzes zu dem Getränk umfaßt, welcher die Bildung einer Schaumkrone auf dem Getränk oder die Verbesserung einer auf ihm ausbildbaren Schaumkrone ermöglicht, und wobei der Zusatz durch teilweise Hydrolyse von Proteinmaterial gewonnene Proteinfragmente umfaßt, dadurch gekennzeichnet, daß das Proteinmaterial Eiweiß umfaßt und in einer wirksamen Menge zugesetzt wird, so daß die Bildung einer Schaumkrone verbessert oder verursacht wird, ohne daß eine Trübung entsteht.

2. Verfahren nach Anspruch 1, dadurch gekennzeichnet, daß der Zusatz als wässrige Lösung hergestellt wird.

3. Verfahren nach Anspruch 2, dadurch gekennzeichnet, daß der Zusatz auch eine kleine Beigabe von Äthylalkohol enthält.

4. Verfahren nach einem der vorangehenden Ansprüche, dadurch gekennzeichnet, daß der Zusatz Fragmente von Proteinmaterial umfaßt, die von jeglichem verbliebenem unzerlegtem Proteinmaterial abgetrennt sind.

5. Verfahren nach einem der vorangehenden Ansprüche, dadurch gekennzeichnet, daß das Getränk in einem Verfahren mit einer Fermentationsstufe hergestellt wird und der Zusatz in einer der Fermentationsstufe nachfolgenden Stufe zugesetzt wird.

6. Verfahren nach Anspruch 5, dadurch gekennzeichnet, daß das Getränk Bier ist.

**Revendications pour les Etats contractants: BE CH DE FR IT LI LU NL SE**

1. Procédé pour modifier ou améliorer de la bière ou autre boisson, cette boisson étant claire et limpide et sans voile, ce procédé comprenant la phase consistant à incorporer à la boisson concernée un additif permettant la formation de mousse sur elle ou d'améliorer la qualité de la mousse qui peut se former sur elle, l'additif étant constitué par des fragments de protéine faite par hydrolyse partielle de matière protéinique, et ce procédé étant caractérisé en ce que la matière protéinique est constituée par de l'albumine d'oeuf, et est ajoutée en une quantité efficace pour améliorer ou provoquer la formation de mousse sans provoquer la formation d'un voile.

2. Procédé suivant la revendication 1, caractérisé en ce que l'additif est formé en solution aqueuse.

3. Procédé suivant la revendication 2, caractérisé en ce que l'additif contient également une addition mineure d'alcool éthylique.

4. Procédé suivant l'une quelconque des revendications précédentes, caractérisé en ce que l'additif est constitué par des fragments de matière protéinique séparés de toute matière protéinique restante non divisée.

5. Procédé suivant l'une quelconque des revendications précédentes, caractérisé en ce que la boisson est fabriquée au moyen d'un procédé comprenant une phase de fermentation et dans lequel l'additif est adjouté à un stade ultérieur à la phase de fermentation.

6. Procédé suivant la revendication 5, caractérisé en ce que la boisson est de la bière.

7. Bière ou autre boisson qui est limpide et sans voile, caractérisée en ce qu'elle est modifiée ou améliorée suivant l'une quelconque des revendications 1 à 6.

**Revendications pour l'Etat contractant: AT**

1. Procédé pour modifier ou améliorer de la bière ou autre boisson, cette boisson étant claire et limpide et sans voile, ce procédé comprenant la phase consistant à incorporer à la boisson concernée un additif permettant la formation de mousse sur elle ou d'améliorer la qualité de la mousse qui peut se former sur elle, l'additif étant constitué par des fragments de protéine faite par hydrolyse partielle de matière protéinique, et ce procédé étant caractérisé en ce que la matière protéinique est constituée par de l'albumine d'oeuf, et est ajoutée en une quantité efficace pour améliorer ou provoquer la formation de mousse sans provoquer la formation d'un voile.

2. Procédé suivant la revendication 1, caractérisé en ce que l'additif est formé en solution aqueuse.

3. Procédé suivant la revendication 2, caractérisé en ce que l'additif contient également une addition mineure d'alcool éthylique.

4. Procédé suivant l'une quelconque des revendications précédentes, caractérisé en ce que l'additif est constitué par des fragments de matière protéinique séparés de toute matière protéinique restante non divisée.

5. Procédé suivant l'une quelconque des revendications précédentes, caractérisé en ce que la boisson est fabriquée au moyen d'un procédé comprenant une phase de fermentation et dans lequel l'additif est adjouté à un stade ultérieur à la phase de fermentation.

6. Procédé suivant la revendication 5, caractérisé en ce que la boisson est de la bière.